# EUROPEAN PATENT SPECIFICATION

(11) **EP 4 323 838 B1**
(45) Date of publication and mention of the grant of the patent: **11.11.2026**
(21) Application number: 22788639.7
(22) Date of filing: 29.03.2022
(51) Int. Cl.: H02P 7/03, G02B 7/08, H02P 7/29, H02P 7/292, G03B 3/10, H02P 7/28, H02P 7/291, H02P 7/298

(54) **CROSS-OVER DISTORTIONLESS PULSE-WIDTH MODULATED (PWM)/LINEAR MOTOR CONTROL SYSTEM AND METHOD THEREOF**
ÜBERKREUZENDES VERZERRUNGSFREIES PULSWEITENMODULIERTES (PWM)/LINEARES MOTORSTEUERUNGSSYSTEM UND VERFAHREN DAZU
SYSTÈME DE COMMANDE DE MOTEUR MODULÉ EN LARGEUR D'IMPULSION (PWM)/LINÉAIRE SANS DISTORSION CROISÉE ET PROCÉDÉ ASSOCIÉ

(30) Priority: 14.04.2021 US 202117230789
(43) Date of publication of application: 21.02.2024
(73) Proprietor: Cirrus Logic International Semiconductor, Ltd., Edinburgh, Lothian EH3 9EG (GB)
(72) Inventor: PARUPALLI, Vamsikrishna, AUSTIN, Texas 78701 (US); MAY, Mark, AUSTIN, Texas 78701 (US); SMITH, Eric B., AUSTIN, Texas 78701 (US); YOU, Zhong, AUSTIN, Texas 78701 (US)
(74) Representative: Knöner, Gregor
(86) International application number: PCT/US2022/022249
(87) International publication number: WO 2022/221046

(56) References cited:
- US-A- 5 838 515
- US-A1- 2005 264 920
- US-A1- 2008 024 213
- US-A1- 2016 344 327
- US-A1- 2018 115 268
- US-A1- 2019 379 389
- US-A1- 2019 379 389
- US-A1- 2020 105 298
- US-B1- 6 392 484
- US-B1- 6 995 537

## Description

### BACKGROUND

### 1. Field of Disclosure

The field of representative embodiments of this disclosure relates to motor drivers and other power output electronics that selectably operate in pulse-width modulated (PWM) and linear modes. and in particular to motor drivers in which cross-over distortion is eliminated while maintaining a continuous feedback loop when the operating mode is changed. Prior art configurations are known for example from US 6 392 484 B1, which discloses the features of the preamble of claims 1 and 10, and further known from US 6 995 537 B1, US 5 838 515 A, US 2005/264920 A1 and US 2019/379389 A1.

### 2. Background

Motor controllers, audio amplifiers, and other power output drivers such as those for driving haptic feedback devices, may be provided with high efficiency using a class-D type output, or low distortion, noise and offset using a linear amplifier. In particular, for motor controllers, a pulse-width modulated (PWM) output stage has been used in combination with linear output motor control to provide high-efficiency for large excursions and low distortion and offset error by transitioning to a linear control once the motor-driven position is close to the commanded position or for functions such as maintaining image focus (auto-focus) or image stabilization. Such operation enhances accuracy by providing a less noisy environment when the system is in a linear operation mode, while providing high power efficiency for large excursions when the system is in the PWM operating mode.

However, when operating a fully-differential switch/amplifier, such as an H-bridge arrangement, while both PWM control and linear control may be implemented, the linear control is operated with class-B biasing, in order to match a closed-loop feedback transfer function of the PWM control in which one device on each side of the H-bridge is always off. Class-B biasing, by definition, introduces cross-over distortion that may be reduced, but not eliminated.

Therefore, it would be advantageous to operate a motor controller such that may operate selectively in PWM or linear mode without cross-over distortion.

### SUMMARY

The present invention is defined by the features of the accompanying independent claims. Modifications of the present invention are defined in the accompanying dependent claims. Improved motor driver operation is accomplished in electronic motor control systems, integrated circuits including the motor control systems and their methods of operation.

The electronic motor control system includes an output stage for supplying the current to the motor, which has a first push-pull driver coupled to a first output for coupling to a first terminal of the motor and a second push-pull driver coupled to a second output for coupling to a second terminal of the motor. A mode selection control circuit selects between a pulse-width modulated mode and a linear mode of the electronic motor controller. The electronic motor control system also includes a pulse-width modulator output stage for providing pulse-width modulated control signals to an input of the output stage when the mode selection control circuit selects the pulse-width modulated mode. In pulse-width modulated mode, a driver is selected according to a direction of the current supplied to the motor and is pulse-width modulated while the other driver is operated to supply a fixed voltage when the mode selection control circuit selects the pulse-width modulated mode. A linear amplifier stage provides a linear analog signal to the input of the output stage in linear mode, so that both drivers are operated to supply the current to the motor. A feedback control loop senses the current supplied to the motor and provides a first output to the pulse-width modulator and a second output to the linear amplifier stage. According to the present invention, the feedback control loop comprises a current sense resistor for each push-pull driver, and a current monitor circuit. Both current sense resistors are configured to provide inputs, in particular via fully-differential amplifiers, to the current monitor circuit. The current monitor circuit is configured to measure and subtract the voltages across both sense resistors in the linear mode. The current monitor circuit may be further configured to sense the motor current through one of the sense resistors that is connected to a transistor that is turned on to sink current through the motor in the pulse-width modulated mode

In some embodiments, a first transfer function from an input to the selected one of the first push-pull driver or the second push-pull driver in the pulse-width modulated mode is made substantially equivalent to a second transfer function from the input to the combination of the first push-pull driver and the second push-pull driver in the linear mode, so that an output of a loop filter of the feedback control loop settles to approximately a same value after the mode selection control changes between the linear mode and the pulse-width modulated mode as a previous value of the output of the loop filter prior to the change.

The invention is defined in device of independent claim 1 and method of independent claim 10. Preferred embodiments are disclosed in dependent claims 2 to 9 and 11 to 15.

### BRIEF DESCRIPTION OF THE DRAWINGS

**Figure 1** is a block diagram illustrating a mobile device **10,** in accordance with an embodiment of the disclosure.
**Figure 2A** is a block diagram illustrating an example output stage **20A** of motor controller **20** of Figure 1 operating in a linear operating mode and **Figure 2B** is a block diagram illustrating an example output stage **20B** of motor controller **20** of Figure 1 in a pulse-width modulated (PWM) operating mode, in accordance with an embodiment of the disclosure.
**Figure 3** is a simplified schematic diagram of an example motor control circuit 30 within motor controller **20** of Figure 1, in accordance with an embodiment of the disclosure.
**Figure 4** is an example signal waveform diagram illustrating operation of motor control circuit **30** of **Figure 3****,** in accordance with an embodiment of the disclosure.
**Figure 5** **is** an example flowchart illustrating operation of mobile device **10** of **Figure 1****,** in accordance with an embodiment of the disclosure.

### DESCRIPTION OF ILLUSTRATIVE EMBODIMENT

The present disclosure encompasses circuits and integrated circuits that include improved motor control systems and their method of operation. The electronic motor control systems include an output stage that supplies current to a motor, and which has a first push-pull driver coupled to a first output for coupling to a first terminal of the motor and a second push-pull driver coupled to a second output for coupling to a second terminal of the motor. A mode selection control circuit selects between a pulse-width modulated mode and a linear mode of the electronic motor controller. In pulse-width modulated mode, a driver is selected according to a direction of the current supplied to the motor and is pulse-width modulated to provide a single-ended class B driver, while the other driver is operated to supply a fixed voltage when the mode selection control circuit selects the pulse-width modulated mode. In linear mode, both drivers are operated to supply the current to the motor as a differential class AB amplifier. The resulting operation avoids cross-over distortion, as in the linear mode of operation, the output stage conducts current on either side of zero current output. While the following description is provided with reference to block diagrams, it is understood that the description included therein are applicable to a process that may be implemented, in part, by a digital signal processor executing a computer program product according to an embodiment of the disclosure as described in further detail below.

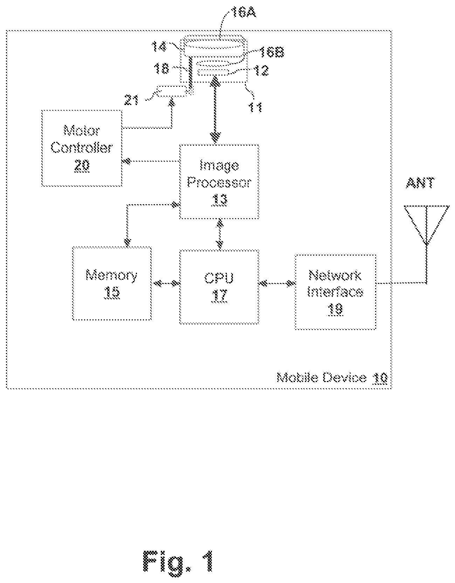

Referring now to **Figure 1****,** a block diagram of an example mobile device **10** is shown, in accordance with an embodiment of the disclosure. Example mobile device **10** may be a wireless mobile telephone, tablet, notebook computer, or a similar device. Alternatively, mobile device may be a digital camera or other system that incorporates a position-controlled image sensor. Operation of mobile device **10** is controlled by a central processing unit (CPU) **17,** which may be a microcontroller, microprocessor or other processor core, such as a processor core in a dedicated system-on-chip (SOC) implementation. CPU **17** is coupled to a memory **15** that stores program instructions forming a computer-program product, program data and other data such as media, including digital photographs. Memory **15** may include both non-volatile and dynamic storage elements. A network interface **19** provides for connection of mobile device **10** to a wireless network via an antenna **ANT,** but is not required for implementation of embodiments according to the disclosure, for example in a camera providing only a wired interface. A separate image processor **13** is also coupled to memory **15,** and memory may comprise separate storage for program instructions forming another computer-program product, and data that may not be accessed directly by CPU **17.** Image processor **13** provides an interface for receiving data from an image sensor **12** of a camera **11** within mobile device **10** and also provides an interface to a motor controller **20** that controls a motor **21** that positions a movable lens **16A,** or multiple lenses, of camera **11,** responsive to commands from image processor **13** that cause movement of a mount **14** via a mechanical linkage **18** coupled to motor **21.** The commands are generally motor current commands to control the speed of the motor as computed by CPU **17** or image processor **13,** which may provide zoom, auto-focus and image stabilization functions as described in further detail below. Another fixed lens **16B** receives an image from movable lens **16A** to produce an image of the subject of a photograph or other image processing subject on image sensor **12.**

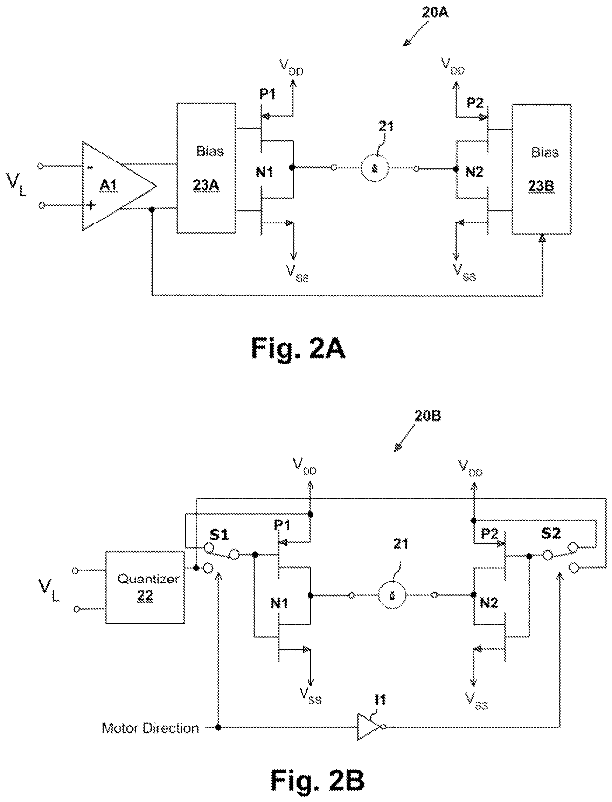

Referring now to **Figure 2A****, a** simplified block diagram illustrating an example of an output stage **20A** of motor controller **20** within mobile device **10** of Figure 1 configured in a linear operating mode is shown, in accordance with an embodiment of the disclosure. An H-bridge circuit formed by transistors **P1, P2, N1** and **N2** are controlled by outputs of a differential amplifier **A1** to provide operating current to motor **21.** Bias circuits **23A, 23B** set the quiescent operating current in respective sides of the H-bridge, i.e., quiescent current flowing from a positive power supply rail **V_{DD}** through transistor **P1** and through transistor **N1** to a negative power supply rail **Vss,** which may be ground, and quiescent current flowing from positive power supply rail **V_{DD}** through transistor **P2** and through transistor **N2** to negative power supply rail **Vss.** The bias of transistors **P1, P2, N1** and **N2** is set for class AB operation, so that when a loop filter output voltage **V_{L}** provided to the input of an amplifier/pre-driver **A1** that the input signals to the H-bridge through bias circuits **23A, 23B,** has zero amplitude, a current is maintained flowing through each half of the H-bridge, avoiding cross-over distortion in the output signal provided to motor **21.**

Referring now to **Figure 2B****,** a simplified block diagram illustrating an example of an output stage **20B** of motor controller **20** within mobile device **10** of Figure 1 configured in a pulse-width modulated (PWM) mode is shown, in accordance with an embodiment of the disclosure. A pair of switches **S1, S2** select a left side or right side of the H-bridge circuit for PWM control by an output of a quantizer **22** that quantizes loop filter output voltage **V_{L}** to provide operating current to motor **21.** The other, unselected, side of the H-bridge has gate terminals of both transistors tied to power supply rail **V_{DD},** so that the N-channel transistor (transistor **N1** or transistor **N2)** is turned on and the P-channel transistor (transistor **P1** or transistor **P2)** is turned off, thus the unselected side of the H-bridge will provide a fixed voltage close to the voltage of power supply rail **Vss.** Selection of the modulated vs. fixed voltage side of the H-bridge circuit is controlled by a **Motor Direction** control signal, so that output stage **20B** is operated in a single-ended mode, in which only one side of the H-bridge is modulated rather than using both sides of the H-bridge to differentially drive motor **21** in PWM mode. The disclosed architecture allows the H-bridge output driver formed by transistors **P1, P2, N1** and **N2** to be shared for both PWM mode and linear mode, rather than using separate linear mode drivers, which provides reduction of switching noise and allows the control loop to have the same response for the PWM mode as in the linear mode illustrated **in** **Figure 2A****.** In linear mode, the disclosed architecture of **Figure 2A** and **Figure 2B** also provides the ability to operate in linear mode across the full range of output voltage, i.e., to voltages near power supply rails **V_{DD}** and **Vss** on opposite sides of the H-bridge if required, rather than at some lower signal amplitude.

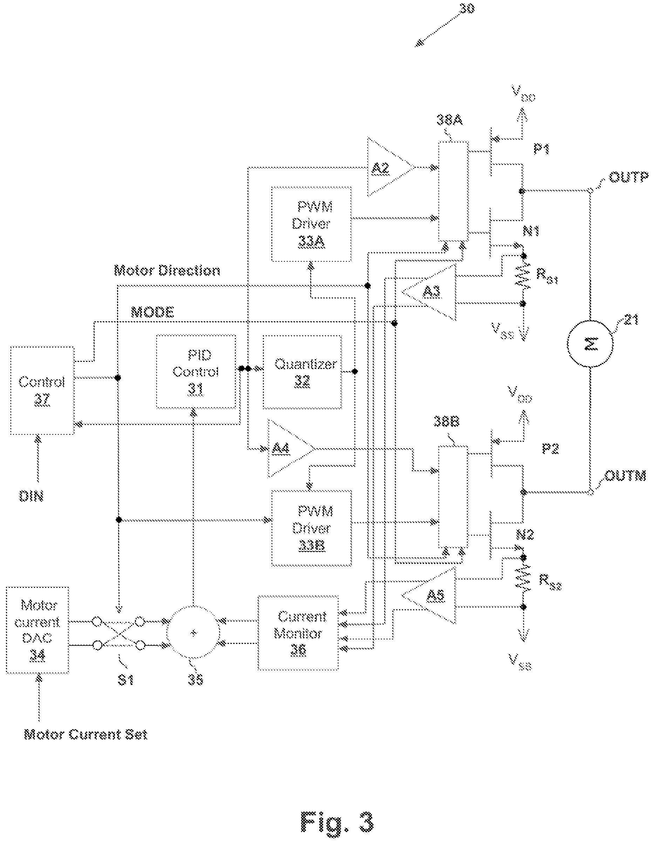

Referring now to **Figure 3****, a** simplified schematic diagram of an example motor control circuit **30** within motor controller **20** of Figure 1 is shown, in accordance with an embodiment of the disclosure. Each half of the H-bridge formed by transistors **P1, P2, N1** and **N2** includes a current sense resistor **R_{S1}, R_{S2}** that provide inputs to a current monitor circuit **36,** via fully-differential amplifiers **A3** and **A5,** respectively. In PWM mode, the motor current is sensed on the "sink" side, i.e., through the sense resistor **R_{S1}** or **R_{S2}** that is connected to the transistor **N1** or **N2** that is turned on to sink current through motor **21** that is provided by the other side of the H-bridge, since the current will be in only one direction. In linear mode, the voltages across both sense resistors **R_{S1}, R_{S2}** is measured and effectively subtracted by current monitor circuit **36,** which causes cancelation of measured class-AB bias current conducted by both sides of the H-bridge, while the motor current remains in the measurement, since only one of transistors **N1** or **N2** is conducting the motor current. Current monitor circuit **36** combines the outputs of fully-differential amplifiers **A3** and **A5** to provide a measure of the current delivered to motor **21,** and a combiner **35** generates feedback signals from a differential output of current monitor circuit **36,** which are provided as an input to a proportional integral-derivative (PID) control block **31.** PID control block **31** corrects for the phase difference between the motor current through the inductive load of motor **21** and generates an output that provides an input to a quantizer **32,** which generates PWM output signals that provide input to a pair of PWM drivers **33A, 33B.** The outputs of PWM drivers **33A, 33B** are provided as inputs to respective to selector blocks **38A, 38B.** Selector blocks **38A, 38B,** include the functionality of switches **S1, S2** described with reference to Figure 2B above, as well as selection between providing the output of one of PWM drivers **33A, 33B** to the side of the H-bridge that is being modulated when a control signal **MODE** is asserted, or providing the outputs of both of a pair of linear driver amplifiers **A2, A4** to their corresponding side of the H-bridge when mode control signal **MODE** is de-asserted. Linear driver amplifiers **A2, A4** also receive the output of PID control block **31,** so that a common feedback loop is shared between linear and PWM mode drive. Linear driver amplifiers **A2, A4** have a gain that compensates for the difference between the single-ended PWM signal generated by only one half of the H-bridge vs. the differential signaling during operation of the H-bridge in linear mode, e.g., an attenuation of 1/2. Selector blocks **38A, 38B,** also include the bias resistors or active bias circuits that bias transistors **P1, P2, N1** and **N2** to provide Class AB bias when linear mode is selected, i.e., all of transistors **P1, P2, N1** and N2 conduct a bias current in addition to signal current.

Input to example motor control circuit **30** within motor controller **20** of Figure 1, is provided from CPU **17** or image processor **13** of Figure 1, or both, and consists of digital input value **Motor Current Set.** Digital input value **Motor Current Set** is provided to a motor current DAC **34** that is coupled through cross-point switch **S1,** which interchanges the output signals of DAC **34** to provide negative values corresponding to a reverse motor direction when control signal **Motor Direction** is asserted. Control signal **Motor Direction** is controlled by a control circuit **37** that receives commands from a digital command input **DIN** coupled to one or both of CPU **17** and image processor **13** of Figure 1 to select linear or PWM operating mode, initiate a motor current control command and set the motor direction.

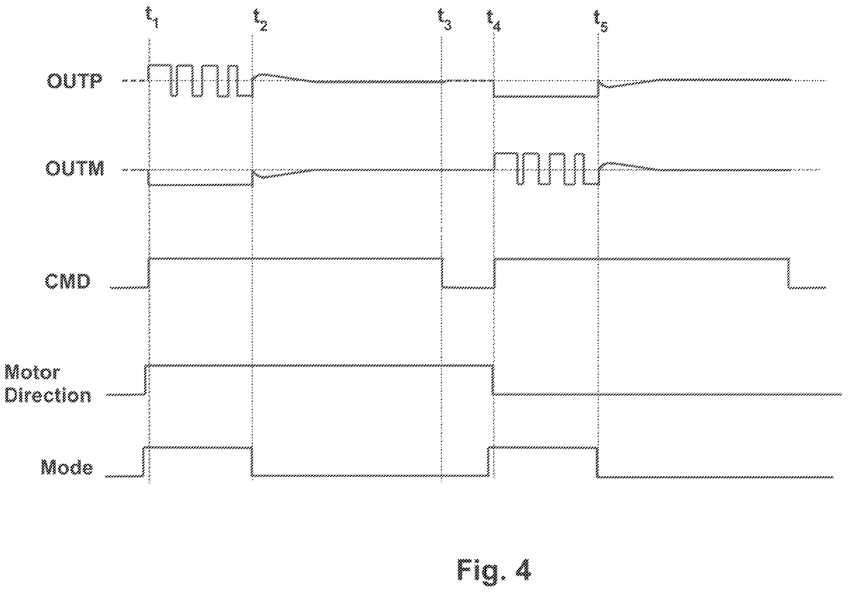

Referring now to **Figure 4****,** an example signal waveform diagram illustrating operation of motor control circuit **30** of Figure 3 is shown, in accordance with an embodiment of the disclosure. At time **t₁,** a lens position command is received, represented by signal **CMD,** which illustrates the time period during which the command is valid. Output terminal **OUTM** is set to power supply rail **Vss** e.g., by turning transistor **N2** on and transistor **P2** off, in accordance with control signal **Motor Direction..** Output terminal **OUTP** is pulse-width modulated by operating transistors **N1** and **P1** according to the output of quantizer **32,** in accordance with the state of control signal **MODE.** At time **t₂,** control signal **MODE** is de-asserted, for example, when the position of motor **21** nears the commanded position and a command is received to change the operating mode to linear. After time **t₂,** motor controller **20** operates in linear mode and output terminals **OUTM** and **OUTP** are both driven as the commanded position is reached and until the end of the control of position occurs at time **t₃.** At time **t₄,** another positioning command is received with an opposite state of control signal **Motor Direction.** Output terminal **OUTM** is pulse-width modulated by operating transistors **N2** and **P2** according to the output of quantizer **32,** which causes output terminal **OUTP** to be set to power supply rail **Vss,** e.g., by turning transistor **P1** off and transistor **N1** on. After time **t₅,** motor controller **20** operates in linear mode and output terminals **OUTM** and **OUTP** are both driven as the commanded position is reached.

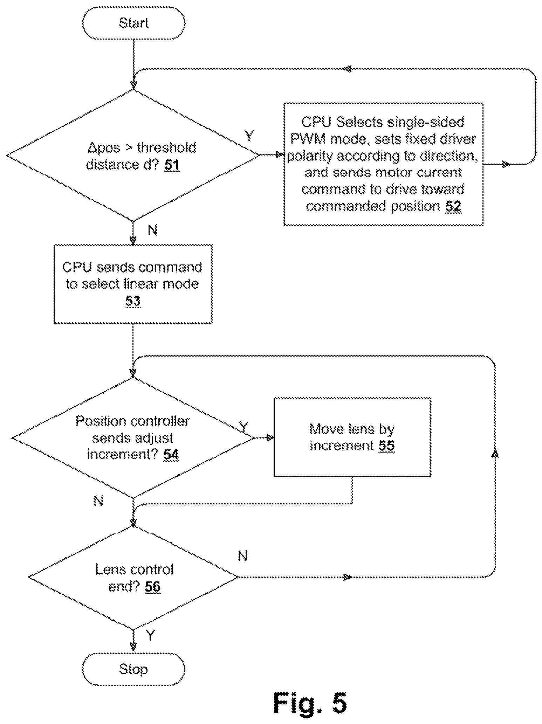

Referring now to **Figure 5****,** an example flowchart illustrating operation of mobile device **10** of Figure 1 is shown, in accordance with an embodiment of the disclosure. While the difference in position **Δpos** between a desired position and the actual position of lens **16A** is greater than a threshold distance **d (decision 51),** the motor proceeds to move the lens. Initially, single-sided PWM mode is selected with a fixed driver polarity voltage provided at one side of the H-bridge while the motor is driven toward the commanded position **(step 52).** Once the difference in position **Δpos** has reached threshold distance **d,** a mode change command is received causing selection of the linear mode and the motor is driven to the commanded position **(step 53).** If motor controller **20** receives a position increment command **(decision 54),** e.g., from an auto-focus module of the program executed by image processor **13** that has determined that camera **11** requires a focus adjustment or from an image stabilization module that has determined that the image is moving and requires a consequent focal length adjustment in addition to any image processing to compensate for movement, motor controller **20** moves lens **16A** by the increment **(step 55).** Until the camera lens control ends **(decision 56),** steps 54-55 are repeated to maintain image focus.

As mentioned above, portions of the disclosed processes may be carried out by the execution of a collection of program instructions forming a computer program product stored on a non-volatile memory, but that also exist outside of the non-volatile memory in tangible forms of storage forming a computer-readable storage medium. The computer-readable storage medium may be, for example, but is not limited to, an electronic storage device, a magnetic storage device, an optical storage device, an electromagnetic storage device, a semiconductor storage device, or any suitable combination of the foregoing. Specific examples of the computer-readable storage medium includes the following: a hard disk, semiconductor volatile and non-volatile memory devices, a portable compact disc read-only memory (CD-ROM) or a digital versatile disk (DVD), a memory stick, a floppy disk or other suitable storage device not specifically enumerated. A computer-readable storage medium, as used herein, is not to be construed as being transitory signals, such as transmission line or radio waves or electrical signals transmitted through a wire. It is understood that blocks of the block diagrams described above may be implemented by computer-readable program instructions. These computer readable program instructions may also be stored in other storage forms as mentioned above and may be downloaded into a non-volatile memory for execution therefrom. However, the collection of instructions stored on media other than system non-volatile memory described above also form a computer program product that is an article of manufacture including instructions which implement aspects of the functions/actions specified in the block diagram block or blocks.

In summary, this disclosure shows and describes systems and integrated circuits implementing an electronic motor control system, and their methods of operation. The system includes an output stage for supplying the current to the motor. The output stage may have a first push-pull driver coupled to a first output for coupling to a first terminal of the motor and a second push-pull driver coupled to a second output for coupling to a second terminal of the motor. The system may include a mode selection control circuit for selecting between a pulse-width modulated mode and a linear mode of the electronic motor controller, and a pulse-width modulated (PWM) driver stage for providing pulse-width modulated drive signals to an input of the output stage when the mode selection control circuit selects the pulse-width modulated mode. The mode selection control circuit may select one of the first push-pull driver or the second push-pull driver in conformity with a direction of the current supplied to the motor, and the selected one of the first push-pull driver or the second push-pull driver may be pulse-width modulated while another one of the first push-pull driver or the second push-pull driver may be operated to supply a fixed voltage when the mode selection control circuit selects the pulse-width modulated mode. The system may include a linear amplifier stage for providing a linear analog signal to the input of the output stage when the mode selection control circuit selects the linear mode, so that both the first push-pull driver and the second push-pull driver may be operated to supply the current to the motor when the mode selection control circuit selects the linear mode. The system may also include a feedback control loop for sensing the current supplied to the motor and providing a first output to the pulse-width modulator and a second output to the linear amplifier stage.

In some example embodiments, the system may include an input for receiving a motor current control value, and a first transfer function from the input to the selected one of the first push-pull driver or the second push-pull driver when the mode selection control circuit selects the pulse-width modulated mode may be substantially equivalent to a second transfer function from the input to the combination of the first push-pull driver and the second push-pull driver when the mode selection control circuit selects the linear mode, so that an output of a loop filter of the feedback control loop settles to approximately a same value after the mode selection control changes between the linear mode and the pulse-width modulated mode as a previous value of the output of the loop filter prior to the change. In some example embodiments, the input may be a digital input for receiving a digital current control value, and the electronic motor control system may further include a digital-to-analog converter (DAC) for receiving the digital current control value and generating an analog output provided to the feedback control loop. In some example embodiments, the system may include a pulse-width modulator for providing an input to the pulse-width modulator output stage, a loop filter of the feedback control loop, a quantizer of the pulse-width modulator having an input coupled to a first output of the loop filter, so that an input of the linear amplifier stage is coupled to a second output of the loop filter, and a current sense block coupled to at least one of the output stage or the motor and having an output coupled to the feedback control loop. In some example embodiments, the system may include a position sensor that detects a position controlled by the motor and a processing subsystem for receiving an output of the position sensor and generating an output provided to an input of the feedback control loop. In some example embodiments, the position sensor may be an image sensor mechanically coupled to the motor, and the processing subsystem may include an image processor. In some example embodiments, the image processor may detect instability in an image provided by the image processor and controls the output provided to the input of the feedback control loop to stabilize the image. In some example embodiments, the image processor may detect a measure of a focus of an image provided by the image processor and control the output provided to the input of the feedback control loop to maintain a focus of the image. In some example embodiments, when the mode selection control selects the linear mode, the first push-pull driver and the second push-pull driver may be operated as class-AB linear drivers. In some example embodiments, when the mode selection control selects the linear mode, the first push-pull driver and the second push-pull driver may provide a signal swing that extends substantially over a range of voltage from a negative power supply rail supplied to the output stage to a positive power supply rail supplied to the output stage.

## Claims

1. An electronic motor control system, comprising:
an output stage for supplying the current to the motor (21), the output stage having a first push-pull driver coupled to a first output for coupling to a first terminal of the motor (21) and a second push-pull driver coupled to a second output for coupling to a second terminal of the motor (21);
a mode selection control circuit (37) for selecting between a pulse-width modulated mode and a linear mode of the electronic motor controller (20);
a pulse- width modulator output driver (33A, 33B) for providing pulse-width modulated drive signals to an input of the output stage when the mode selection control circuit (37) selects the pulse-width modulated mode, wherein the mode selection control circuit (37) selects one of the first push-pull driver or the second push-pull driver in conformity with a direction of the current supplied to the motor (21), and wherein the selected one of the first push-pull driver or the second push-pull driver is pulse-width modulated and another one of the first push-pull driver or the second push-pull driver is operated to supply a fixed voltage when the mode selection control circuit (37) selects the pulse-width modulated mode;
a linear amplifier stage (A2, A4) for providing a linear analog signal to the input of the output stage when the mode selection control circuit (37) selects the linear mode, wherein both the first push-pull driver and the second push-pull driver are operated in combination to supply the current to the motor (21) by simultaneous conduction of the current supplied to the motor (21) through both the first push-pull driver and the second push-pull driver, so that the first push-pull driver and the second push-pull driver operate in combination as a class AB differential driver when the mode selection control circuit (37) selects the linear mode; and
a feedback control loop for sensing the current supplied to the motor (21) and providing a first output to the pulse-width modulator (33A, 33B) and a second output to the linear amplifier stage (A2, A4),
**characterized in that**
the feedback control loop comprises a current sense resistor (R_{S1}, R_{S2}) for each push-pull driver, and a current monitor circuit (36), and wherein both current sense resistors (R_{S1}, R_{S2}) are configured to provide inputs, in particular via fully-differential amplifiers (A3, A5), to the current monitor circuit (36), wherein the current monitor circuit (36) is configured to measure and subtract the voltages across both sense resistors (R_{S1}, R_{S2}) in the linear mode.

2. The electronic motor control system of Claim 1, wherein the current monitor circuit (36) is configured to sense the motor current through one of the sense resistors (R_{S1}, R_{S2}) that is connected to a transistor (N1, N2) that is turned on to sink current through the motor (21) in the pulse-width modulated mode.

3. The electronic motor control system of any of the preceding Claims, further comprising an input for receiving a motor current control value (DIN), wherein a first transfer function from the input to the selected one of the first push-pull driver or the second push-pull driver when the mode selection control circuit (37) selects the pulse-width modulated mode is substantially equivalent to a second transfer function from the input to the combination of the first push-pull driver and the second push-pull driver when the mode selection control circuit (37) selects the linear mode, such that an output of a loop filter (31) of the feedback control loop settles to approximately a same value after the mode selection control (37) changes between the linear mode and the pulse-width modulated mode as a previous value of the output of the loop filter (31) prior to the change.

4. The electronic motor control system of any of the preceding Claims, wherein the input is a digital input for receiving a digital current control value, and wherein the electronic motor control system (20) further comprises a digital-to-analog converter (DAC) (34) for receiving the digital current control value and generating an analog output provided to the feedback control loop.

5. The electronic motor control system of any of the preceding Claims, further comprising:
a pulse-width modulator (33A, 33B) for providing an input to the pulse-width modulator output stage (OUTM, OUTP);
a loop filter (31) of the feedback control loop;
a quantizer (32) of the pulse-width modulator (33A, 33B) having an input coupled to a first output of the loop filter (31), wherein an input of the linear amplifier stage (A2, A4) is coupled to a second output of the loop filter (31); and
a current sense block (R_{S1,}R_{S2}) coupled to at least one of the output stage (OUTM, OUTP) or the motor (21) and having an output coupled to the feedback control loop.

6. The electronic motor control system of any of the preceding Claims, further comprising:
a position sensor that detects a position controlled by the motor (21); and
a processing subsystem (17) for receiving an output of the position sensor and generating an output (DIN) provided to an input of the feedback control loop (35).

7. The electronic motor control system of Claim 5, wherein the position sensor is an image sensor (12) mechanically coupled to the motor (21), and wherein the processing subsystem (17) includes an image processor (13), wherein in particular the image processor (13) is configured to detect instability in an image provided by the image processor (13) and to control the output provided to the input (DIN) of the feedback control loop to stabilize the image, and/or
wherein in particular the image processor is configured to detect a measure of a focus of an image provided by the image processor (13) and to control the output provided to the input (DIN) of the feedback control loop to maintain a focus of the image.

8. The electronic motor control system of any of the preceding Claims, wherein when the mode selection control (37) selects the linear mode, the first push-pull driver and the second push-pull driver provide a signal swing that extends substantially over a range of voltage from a negative power supply rail (V_{SS}) supplied to the output stage to a positive power supply rail (V_{DD}) supplied to the output stage (OUTM, OUTP).

9. The electronic motor control system of any of the preceding claims, wherein when the mode selection control circuit (37) selects the pulse-width modulated mode and when the another one of the first push-pull driver or the second push-pull driver is operated to supply a fixed voltage, then the another one of the first push-pull driver or the second push-pull driver is turned fully on in one polarity to provide the fixed voltage to the respective terminal of the motor.

10. A method of providing electronic control of a motor, comprising:
supplying the current to the motor (21) from an output stage having a first push-pull driver coupled to a first output for coupling to a first terminal of the motor (21) and a second push-pull driver coupled to a second output for coupling to a second terminal of the motor (21);
selecting between a pulse-width modulated mode and a linear mode of operation;
responsive to selecting pulse-width modulated mode, providing pulse-width modulated control signals to an input of the output stage (OUTM, OUTP), selecting a one of the first push-pull driver or the second push-pull driver in conformity with a direction of the current supplied to the motor (21) for pulse-width modulation and selecting another one of the first push-pull driver or the second push-pull driver to supply a fixed voltage;
responsive to selecting the linear mode of operation, providing a linear analog signal to the input of the output stage (OUTM, OUTP), wherein both the first push-pull driver and the second push-pull driver are operated in combination to supply the current to the motor (21) by simultaneous conduction of the current supplied to the motor (21) through both the first push-pull driver and the second push-pull driver, so that the first push-pull driver and the second push-pull driver operate in combination as a class AB differential driver; and
sensing the current supplied to the motor (21) and providing a first feedback output to the pulse-width modulator (33A, 33B) and a second feedback output to the linear amplifier stage (A2, A4),
and **characterized by**
sensing the current supplied to the motor (21) comprises measuring and subtracting voltages across sense resistors (RS1, RS2) of both push-pull drivers in the linear mode.

11. The method of Claim 10, further comprising receiving a motor current control value at an input, wherein a first transfer function from the input to the selected one of the first push-pull driver or the second push-pull driver when the selecting (37) selects the pulse-width modulated mode is substantially equivalent to a second transfer function from the input to the combination of the first push-pull driver and the second push-pull driver when the selecting (37) selects the linear mode, such that an output of a loop filter (31) of a feedback control loop that provides the first feedback output and the second feedback output settles to approximately a same value after the selecting (37) changes selection between the linear mode and the pulse-width modulated mode as a previous value of the output of the loop filter (31) prior to the change.

12. The method of Claim 10 or 11, further comprising:
receiving a digital current control value at a digital input; and
converting the digital current control value with a digital-to-analog converter (DAC) (34) to an analog output provided to the feedback control loop; and/or
wherein the method further comprises filtering the second feedback output with a loop filter (31); and
quantizing an output of the loop filter (31) to generate the pulse-width modulated control signals.

13. The method of any of Claims 10-12, further comprising:
detecting a position controlled by the motor (21); and
generating an output provided to an input of the feedback control loop in conformity with the detected position (51).

14. The method of Claim 13, wherein the detecting a position is performed by an image sensor (12) mechanically coupled to the motor (21), and wherein the generating an output is performed by an image processor (13),
wherein the method preferably further comprises:
the image processor (13) detecting an instability in an image provided by the image processor (13);
controlling the output provided to the input of the feedback control loop to stabilize the image,
and/or wherein the method preferably further comprises:
the image processor (13) detecting a measure of a focus of an image provided by the image processor (13); and
controlling the output provided to the input (DIN) of the feedback control loop to maintain a focus of the image.

15. The method of any of Claims 9-14, wherein when the selecting (37) selects the linear mode, the first push-pull driver and the second push-pull driver provide a signal swing that extends substantially over a range of voltage from a negative power supply rail (V_{SS}) supplied to the output stage to a positive power supply rail (V_{DD}) supplied to the output stage.

## Patentansprüche

1. Ein elektronisches Motorsteuersystem, umfassend:
eine Ausgangsstufe zum Liefern des Stroms an den Motor (21), wobei die Ausgangsstufe einen ersten Gegentakttreiber, der mit einem ersten Ausgang zum Koppeln an einen ersten Anschluss des Motors (21) gekoppelt ist, und einen zweiten Gegentakttreiber, der mit einem zweiten Ausgang zum Koppeln an einen zweiten Anschluss des Motors (21) gekoppelt ist, aufweist;
eine Modusauswahl-Steuerschaltung (37) zum Auswählen zwischen einem pulsbreitenmodulierten Modus und einem linearen Modus der elektronischen Motorsteuerung (20);
einen Pulsweitenmodulator-Ausgangstreiber (33A, 33B) zum Bereitstellen pulsweitenmodulierter Ansteuersignale an einen Eingang der Ausgangsstufe, wenn die Modusauswahl-Steuerschaltung (37) den pulsweitenmodulierten Modus auswählt, wobei die Modusauswahl-Steuerschaltung (37) entsprechend der Richtung des dem Motor (21) zugeführten Stroms entweder den ersten Gegentakttreiber oder den zweiten Gegentakttreiber auswählt, und wobei der ausgewählte von dem ersten Gegentakttreiber oder dem zweiten Gegentakttreiber pulsbreitenmoduliert wird und der jeweils andere von dem ersten Gegentakttreiber oder dem zweiten Gegentakttreiber so betrieben wird, dass er eine feste Spannung liefert, wenn die Modusauswahl-Steuerschaltung (37) den pulsbreitenmodulierten Modus auswählt;
eine lineare Verstärkerstufe (A2, A4) zum Bereitstellen eines linearen analogen Signals am Eingang der Ausgangsstufe, wenn die Modusauswahl-Steuerschaltung (37) den linearen Modus auswählt, wobei sowohl der erste Gegentakttreiber als auch der zweite Gegentakttreiber gemeinsam betrieben werden, um den Motor (21) mit Strom zu versorgen, indem der dem Motor (21) zugeführte Strom gleichzeitig sowohl über den ersten Gegentakttreiber als auch über den zweiten Gegentakttreiber fließt, sodass der erste Gegentakttreiber und der zweite Gegentakttreiber gemeinsam als Differenzverstärker der Klasse AB arbeiten, wenn die Modusauswahl-Steuerschaltung (37) den linearen Modus auswählt; und
eine Rückkopplungsregelschleife zum Erfassen des dem Motor (21) zugeführten Stroms und zum Bereitstellen eines ersten Ausgangssignals für den Pulsweitenmodulator (33A, 33B) und eines zweiten Ausgangssignals für die lineare Verstärkerstufe (A2, A4),
**dadurch gekennzeichnet, dass** die Rückkopplungsregelschleife für jeden Gegentakttreiber einen Strommesswiderstand (R_{S1}, R_{S2}) und eine Stromüberwachungsschaltung (36) umfasst, und
wobei beide Strommesswiderstände (R_{S1}, R_{S2}) konfiguriert sind, um, insbesondere über voll-differenzielle Verstärker (A3, A5), Eingänge an die Stromüberwachungsschaltung (36) bereitzustellen, wobei die Stromüberwachungsschaltung (36) konfiguriert ist, um im linearen Modus die Spannungen an beiden Messwiderständen (R_{S1}, R_{S2}) zu messen und zu subtrahieren.

2. Das elektronische Motorsteuersystem nach Anspruch 1, wobei die Stromüberwachungsschaltung (36) konfiguriert ist, um den Motorstrom über einen der Messwiderstände (RS1, RS2) zu erfassen, der mit einem Transistor (N1, N2) verbunden ist, der im pulsbreitenmodulierten Modus eingeschaltet wird, um Strom durch den Motor (21) abzuleiten.

3. Das elektronische Motorsteuersystem nach einem der vorhergehenden Ansprüche, ferner umfassend einen Eingang zum Empfangen eines Motorstrom-Steuerwerts (DIN), wobei eine erste Übertragungsfunktion vom Eingang zu dem ausgewählten von dem ersten Gegentakttreiber oder dem zweiten Gegentakttreiber, wenn die Modusauswahl-Steuerschaltung (37) den pulsbreitenmodulierten Modus auswählt, im Wesentlichen äquivalent zu einer zweiten Übertragungsfunktion vom Eingang zur Kombination aus dem ersten Gegentakttreiber und dem zweiten Gegentakttreiber ist, wenn die Modusauswahl-Steuerschaltung (37) den linearen Modus auswählt, so dass sich ein Ausgangssignal eines Schleifenfilters (31) der Rückkopplungsregelschleife nach einem Wechsel der Modusauswahl (37) zwischen dem linearen Modus und dem pulsbreitenmodulierten Modus auf ungefähr denselben Wert einpendelt wie ein vorheriger Wert des Ausgangssignals des Schleifenfilters (31) vor dem Wechsel.

4. Das elektronische Motorsteuersystem nach einem der vorhergehenden Ansprüche, wobei der Eingang ein digitaler Eingang zum Empfangen eines digitalen Stromsteuerwerts ist und wobei das elektronische Motorsteuersystem (20) ferner einen Digital-Analog-Wandler (DAC) (34) umfasst, der den digitalen Stromsteuerwert empfängt und ein analoges Ausgangssignal erzeugt, das der Rückkopplungsregelschleife zugeführt wird.

5. Das elektronische Motorsteuersystem nach einem der vorhergehenden Ansprüche, ferner umfassend:
einen Pulsweitenmodulator (33A, 33B) zum Bereitstellen eines Eingangssignals für die Pulsweitenmodulator-Ausgangsstufe (OUTM, OUTP);
ein Schleifenfilter (31) der Rückkopplungsregelschleife;
einen Quantisierer (32) des Pulsweitenmodulators (33A, 33B), dessen Eingang mit einem ersten Ausgang des Schleifenfilters (31) gekoppelt ist, wobei ein Eingang der linearen Verstärkerstufe (A2, A4) mit einem zweiten Ausgang des Schleifenfilters (31) gekoppelt ist; und
einen Strommessblock (RS1, RS2), der mit mindestens einem der Ausgangsstufe (OUTM, OUTP) oder dem Motor (21) gekoppelt ist und dessen Ausgang mit der Rückkopplungsregelschleife gekoppelt ist.

6. Das elektronische Motorsteuersystem nach einem der vorhergehenden Ansprüche, ferner umfassend:
einen Positionssensor, der eine vom Motor (21) gesteuerte Position erfasst; und
ein Verarbeitungsteilsystem (17) zum Empfangen eines Ausgangs des Positionssensors und zum Erzeugen eines Ausgangs (DIN), der einem Eingang der Rückkopplungsregelschleife (35) bereitgestellt wird.

7. Das elektronische Motorsteuersystem nach Anspruch 5, wobei der Positionssensor ein Bildsensor (12) ist, der mechanisch mit dem Motor (21) gekoppelt ist, und wobei das Verarbeitungsteilsystem (17) einen Bildprozessor (13) aufweist, wobei insbesondere der Bildprozessor (13) konfiguriert ist, um Instabilitäten in einem vom Bildprozessor bereitgestellten Bild zu erfassen (13) und das an den Eingang (DIN) der Rückkopplungsregelschleife bereitgestellte Ausgangssignal zu steuern, um das Bild zu stabilisieren, und/oder
wobei der Bildprozessor insbesondere konfiguriert ist, um einen Fokus eines vom Bildprozessor (13) bereitgestellten Bildes zu erfassen und das an den Eingang (DIN) der Rückkopplungsregelschleife bereitgestellte Ausgangssignal zu steuern, um den Fokus des Bildes aufrechtzuerhalten.

8. Das elektronische Motorsteuersystem nach einem der vorhergehenden Ansprüche, wobei, wenn die Modusauswahl-Steuerung (37) den linearen Modus auswählt, der erste Gegentakttreiber und der zweite Gegentakttreiber einen Signalschwung bereitstellen, der sich im Wesentlichen über einen Spannungsbereich von einer negativen Versorgungsspannung (V_{SS}), die der Ausgangsstufe zugeführt wird, bis zu einer positiven Versorgungsspannung (V_{DD}), die der Ausgangsstufe (OUTM, OUTP) zugeführt wird, erstreckt.

9. Das elektronische Motorsteuersystem nach einem der vorhergehenden Ansprüche, wobei, wenn die Modusauswahl-Steuerschaltung (37) den pulsbreitenmodulierten Modus auswählt und wenn der jeweils andere von dem ersten Gegentakttreiber oder dem zweiten Gegentakttreiber betrieben wird, um eine feste Spannung bereitzustellen, dann wird der jeweils andere von dem ersten Gegentakttreiber oder dem zweiten Gegentakttreiber in einer Polarität vollständig eingeschaltet, um die feste Spannung an den jeweiligen Anschluss des Motors zu liefern.

10. Verfahren zur elektronischen Steuerung eines Motors, umfassend:
Zuführen von Strom zum Motor (21) aus einer Ausgangsstufe, die einen ersten Gegentakttreiber, der mit einem ersten Ausgang zum Koppeln an einen ersten Anschluss des Motors (21) gekoppelt ist, und einen zweiten Gegentakttreiber, der mit einem zweiten Ausgang zum Koppeln an einen zweiten Anschluss des Motors (21) gekoppelt ist, aufweist;
Auswählen zwischen einem pulsbreitenmodulierten Betriebsmodus und einem linearen Betriebsmodus;
als Reaktion auf das Auswählen des pulsbreitenmodulierten Betriebsmodus, Bereitstellen von pulsbreitenmodulierten Steuersignalen an einen Eingang der Ausgangsstufe (OUTM, OUTP), Auswählen des ersten Gegentakttreibers oder des zweiten Gegentakttreibers entsprechend der Richtung des dem Motor (21) zugeführten Stroms zur Pulsweitenmodulation und Auswählen des jeweils anderen der beiden Gegentakttreiber, um eine feste Spannung bereitzustellen;
als Reaktion auf das Auswählen des linearen Betriebsmodus, Bereitstellen eines linearen analogen Signals an den Eingang der Ausgangsstufe (OUTM, OUTP), wobei sowohl der erste Gegentakttreiber als auch der zweite Gegentakttreiber kombiniert betrieben werden, um den Strom an den Motor (21) zu liefern, indem der an den Motor (21) gelieferte Strom gleichzeitig durch den ersten Gegentakttreiber und den zweiten Gegentakttreiber fließt, sodass der erste Gegentakttreiber und der zweite Gegentakttreiber gemeinsam als Differenzverstärker der Klasse AB arbeiten; und
Erfassen des dem Motor (21) zugeführten Stroms und Bereitstellen eines ersten Rückkopplungsausgangs zum Pulsweitenmodulator (33A, 33B) und eines zweiten Rückkopplungsausgangs an die lineare Verstärkerstufe (A2, A4),
und **dadurch gekennzeichnet, dass** das Erfassen des dem Motor (21) zugeführten Stroms das Messen und Subtrahieren von Spannungen über den Messwiderständen (RS1, RS2) beider Gegentakttreiber im linearen Modus umfasst.

11. Das Verfahren nach Anspruch 10, ferner umfassend Empfang eines Motorstrom-Steuerwerts an einem Eingang, wobei eine erste Übertragungsfunktion vom Eingang zu dem ausgewählten von dem ersten Gegentakttreiber oder dem zweiten Gegentakttreiber, wenn die Auswahl (37) den pulsbreitenmodulierten Modus auswählt, im Wesentlichen äquivalent zu einer zweiten Übertragungsfunktion vom Eingang zu der Kombination aus dem ersten Gegentakttreiber und dem zweiten Gegentakttreiber ist, wenn die Auswahl (37) den linearen Modus auswählt, so dass sich ein Ausgangssignal eines Schleifenfilters (31) einer Rückkopplungsregelschleife, die das erste Rückkopplungsausgangssignal und das zweite Rückkopplungsausgangssignal liefert, nachdem die Auswahl (37) zwischen dem linearen Modus und dem pulsbreitenmodulierten Modus wechselt, auf ungefähr denselben Wert einpendelt wie ein vorheriger Wert des Ausgangssignals des Schleifenfilters (31) vor dem Wechsel.

12. Das Verfahren nach Anspruch 10 oder 11, ferner umfassend:
Empfangen eines digitalen Stromsteuerwerts an einem digitalen Eingang; und
Umwandeln des digitalen Stromsteuerwerts mit einem Digital-Analog-Wandler (DAC) (34) in ein analoges Ausgangssignal, das der Rückkopplungsregelschleife zugeführt wird; und/oder
wobei das Verfahren ferner Filtern des zweiten Rückkopplungsausgangssignals mit einem Schleifenfilter (31) umfasst; und
Quantisieren eines Ausgangssignals des Schleifenfilters (31), um die pulsbreitenmodulierten Steuersignale zu erzeugen.

13. Das Verfahren nach einem der Ansprüche 10 bis 12, ferner umfassend:
Erfassen einer vom Motor (21) gesteuerten Position; und
Erzeugen eines Ausgangs, der einem Eingang der Rückkopplungsregelschleife in Übereinstimmung mit der erfassten Position (51) bereitgestellt wird.

14. Das Verfahren nach Anspruch 13, wobei das Erfassen einer Position durch einen Bildsensor (12) erfolgt, der mechanisch mit dem Motor (21) gekoppelt ist, und wobei das Erzeugen eines Ausgangssignals durch einen Bildprozessor (13) erfolgt,
wobei das Verfahren vorzugsweise ferner umfasst:
Erfassen einer Instabilität in einem vom Bildprozessor (13) bereitgestellten Bild durch den Bildprozessor (13);
Steuern des Ausgangs, der dem Eingang des Rückkopplungsregelkreises zugeführt wird, um das Bild zu stabilisieren,
und/oder wobei das Verfahren vorzugsweise ferner umfasst:
Erfassen eines Maßes für den Fokus eines vom Bildprozessor (13) bereitgestellten Bildes durch den Bildprozessor (13); und
Steuern des Ausgangs, der dem Eingang (DIN) des Rückkopplungsregelkreises zugeführt wird, um den Fokus des Bildes aufrechtzuerhalten.

15. Das Verfahren nach einem der Ansprüche 9-14, wobei, wenn bei der Auswahl (37) der lineare Modus ausgewählt wird, der erste Gegentakttreiber und der zweite Gegentakttreiber einen Signalschwung bereitstellen, der sich im Wesentlichen über einen Spannungsbereich von einer negativen Versorgungsspannung (VSS), die der Ausgangsstufe zugeführt wird, bis zu einer positiven Versorgungsspannung (VDD), die der Ausgangsstufe zugeführt wird, erstreckt.

## Revendications

1. Système électronique de commande de moteur, comprenant :
un étage de sortie pour alimenter le courant sur le moteur (21), l'étage de sortie comprenant un premier pilote push-pull qui est couplé à une première sortie pour un couplage sur une première borne du moteur (21) et un second pilote push-pull qui est couplé à une seconde sortie pour un couplage sur une seconde borne du moteur (21) ;
un circuit de commande de sélection de mode de fonctionnement (37) pour effectuer une sélection entre un mode de fonctionnement modulé en largeur d'impulsion et un mode de fonctionnement linéaire du système électronique de commande de moteur (20) ;
un pilote de sortie de modulateur en largeur d'impulsion (33A, 33B) pour fournir des signaux de pilotage modulés en largeur d'impulsion à une entrée de l'étage de sortie lorsque le circuit de commande de sélection de mode de fonctionnement (37) sélectionne le mode de fonctionnement modulé en largeur d'impulsion, dans lequel le circuit de commande de sélection de mode de fonctionnement (37) sélectionne soit le premier pilote push-pull, soit le second pilote push-pull en fonction d'un sens du courant qui est alimenté sur le moteur (21), et dans lequel le pilote push-pull sélectionné parmi le premier pilote push-pull et le second pilote push-pull est commandé par modulation en largeur d'impulsion et l'autre pilote push-pull parmi le premier pilote push-pull et le second pilote push-pull est commandé de manière à alimenter une tension fixe lorsque le circuit de commande de sélection de mode de fonctionnement (37) sélectionne le mode de fonctionnement modulé en largeur d'impulsion ;
un étage d'amplificateur linéaire (A2, A4) pour fournir un signal analogique linéaire à l'entrée de l'étage de sortie lorsque le circuit de commande de sélection de mode de fonctionnement (37) sélectionne le mode de fonctionnement linéaire, et dans lequel le premier pilote push-pull et le second pilote push-pull sont tous deux commandés en combinaison pour alimenter le courant sur le moteur (21) par conduction simultanée du courant qui est alimenté sur le moteur (21) au travers à la fois du premier pilote push-pull et du second pilote push-pull de telle sorte que le premier pilote push-pull et le second pilote push-pull soient commandés en combinaison en tant que pilote différentiel de classe AB lorsque le circuit de commande de sélection de mode de fonctionnement (37) sélectionne le mode de fonctionnement linéaire ; et
une boucle de commande de rétroaction pour détecter le courant qui est alimenté sur le moteur (21) et pour fournir une première sortie au modulateur en largeur d'impulsion (33A, 33B) et une seconde sortie à l'étage d'amplificateur linéaire (A2, A4),
**caractérisé en ce que** :
la boucle de commande de rétroaction comprend une résistance de détection de courant (R_{S1}, R_{S2}) pour chaque pilote push-pull et un circuit de surveillance du courant (36), et dans lequel les deux résistances de détection de courant (R_{S1}, R_{S2}) sont configurées pour fournir des entrées, en particulier par l'intermédiaire d'amplificateurs entièrement différentiels (A3, A5), au circuit de surveillance du courant (36), dans lequel le circuit de surveillance du courant (36) est configuré pour mesurer et soustraire les tensions à travers les deux résistances de détection de courant (R_{S1}, R_{S2}) dans le mode de fonctionnement linéaire.

2. Système électronique de commande de moteur selon la revendication 1, dans lequel le circuit de surveillance du courant (36) est configuré pour détecter le courant du moteur au travers de l'une des résistances de détection de courant (R_{S1}, R_{S2}) qui est connectée à un transistor (N1, N2) qui est commandé à l'état passant afin de dissiper du courant au travers du moteur (21) dans le mode de fonctionnement modulé en largeur d'impulsion.

3. Système électronique de commande de moteur selon l'une quelconque des revendications précédentes, comprenant en outre une entrée pour recevoir une valeur de commande de courant du moteur (DIN), dans lequel une première fonction de transfert, depuis l'entrée jusqu'au pilote push-pull sélectionné parmi le premier pilote push-pull et le second pilote push-pull lorsque le circuit de commande de sélection de mode de fonctionnement (37) sélectionne le mode de fonctionnement modulé en largeur d'impulsion, est sensiblement équivalente à une seconde fonction de transfert depuis l'entrée jusqu'à la combinaison du premier pilote push-pull et du second pilote push-pull lorsque le circuit de commande de sélection de mode de fonctionnement (37) sélectionne le mode de fonctionnement linéaire, de telle sorte qu'une sortie d'un filtre en boucle (31) de la boucle de commande de rétroaction soit réglée, après que le circuit de commande de sélection de mode de fonctionnement (37) a effectué un changement de sélection entre le mode de fonctionnement linéaire et le mode de fonctionnement modulé en largeur d'impulsion, à sensiblement une même valeur qu'une valeur précédente de la sortie du filtre en boucle (31) avant le changement.

4. Système électronique de commande de moteur selon l'une quelconque des revendications précédentes, dans lequel l'entrée est une entrée numérique pour recevoir une valeur numérique de commande de courant et dans lequel le système électronique de commande de moteur (20) comprend en outre un convertisseur numérique-analogique (DAC) (34) pour recevoir la valeur numérique de commande de courant et pour générer une sortie analogique qui est fournie à la boucle de commande de rétroaction.

5. Système électronique de commande de moteur selon l'une quelconque des revendications précédentes, comprenant en outre :
un modulateur en largeur d'impulsion (33A, 33B) pour fournir une entrée à l'étage de sortie du modulateur en largeur d'impulsion (OUTM, OUTP) ;
un filtre en boucle (31) de la boucle de commande de rétroaction ;
un quantificateur (32) du modulateur en largeur d'impulsion (33A, 33B) qui comporte une entrée qui est couplée à une première sortie du filtre en boucle (31), dans lequel une entrée de l'étage d'amplificateur linéaire (A2, A4) est couplée à une seconde sortie du filtre en boucle (31) ; et
un bloc de détection de courant (R_{S1}, R_{S2}) couplé à au moins un composant parmi l'étage de sortie (OUTM, OUTP) et le moteur (21) et comportant une sortie qui est couplée à la boucle de commande de rétroaction.

6. Système électronique de commande de moteur selon l'une quelconque des revendications précédentes, comprenant en outre :
un capteur de position qui détecte une position qui est commandée par le moteur (21) ; et
un sous-système de traitement (17) pour recevoir une sortie du capteur de position et pour générer une sortie (DIN) qui est fournie à une entrée de la boucle de commande de rétroaction (35).

7. Système électronique de commande de moteur selon la revendication 5, dans lequel le capteur de position est un capteur d'image (12) qui est couplé mécaniquement au moteur (21), et dans lequel le sous-système de traitement (17) comprend un processeur d'image (13), dans lequel en particulier, le processeur d'image (13) est configuré pour détecter une instabilité dans une image qui est fournie par le processeur d'image (13) et pour commander la sortie qui est fournie à l'entrée (DIN) de la boucle de commande de rétroaction afin de stabiliser l'image ; et/ou
dans lequel en particulier le processeur d'image est configuré pour détecter une mesure d'une mise au point d'une image qui est fournie par le processeur d'image (13) et pour commander la sortie qui est fournie à l'entrée (DIN) de la boucle de commande de rétroaction afin de maintenir une mise au point de l'image.

8. Système électronique de commande de moteur selon l'une quelconque des revendications précédentes, dans lequel, lorsque le circuit de commande de sélection de mode de fonctionnement (37) sélectionne le mode de fonctionnement linéaire, le premier pilote push-pull et le second pilote push-pull fournissent une oscillation de signal qui est étendue sensiblement sur une plage de tension depuis un rail d'alimentation électrique négatif (V_{SS}) qui est fourni à l'étage de sortie jusqu'à un rail d'alimentation électrique positif (V_{DD}) qui est fourni à l'étage de sortie (OUTM, OUTP).

9. Système électronique de commande de moteur selon l'une quelconque des revendications précédentes, dans lequel, lorsque le circuit de commande de sélection de mode de fonctionnement (37) sélectionne le mode de fonctionnement modulé en largeur d'impulsion et que l'autre pilote push-pull parmi le premier pilote push-pull et le second pilote push-pull est commandé de manière à alimenter une tension fixe, alors l'autre pilote push-pull parmi le premier pilote push-pull et le second pilote push-pull est commandé à l'état totalement passant selon une polarité afin de fournir la tension fixe à la borne respective du moteur.

10. Procédé de réalisation d'une commande électronique d'un moteur, comprenant :
l'alimentation du courant sur le moteur (21) depuis un étage de sortie qui comprend un premier pilote push-pull qui est couplé à une première sortie pour un couplage sur une première borne du moteur (21) et un second pilote push-pull qui est couplé à une seconde sortie pour un couplage sur une seconde borne du moteur (21) ;
une sélection entre un mode de fonctionnement modulé en largeur d'impulsion et un mode de fonctionnement linéaire ;
en réponse à la sélection du mode de fonctionnement modulé en largeur d'impulsion, la fourniture de signaux de commande modulés en largeur d'impulsion à une entrée de l'étage de sortie (OUTM, OUTP), la sélection de soit le premier pilote push-pull, soit le second pilote push-pull en fonction d'un sens du courant qui est alimenté sur le moteur (21) pour une commande par modulation en largeur d'impulsion et la sélection d'un autre pilote push-pull parmi le premier pilote push-pull et le second pilote push-pull de manière à alimenter une tension fixe ;
en réponse à la sélection du mode de fonctionnement linéaire, la fourniture d'un signal analogique linéaire à l'entrée de l'étage de sortie (OUTM, OUTP), dans lequel le premier pilote push-pull et le second pilote push-pull sont tous deux commandés en combinaison pour alimenter le courant sur le moteur (21) par conduction simultanée du courant qui est alimenté sur le moteur (21) au travers à la fois du premier pilote push-pull et du second pilote push-pull de telle sorte que le premier pilote push-pull et le second pilote push-pull soient commandés en combinaison en tant que pilote différentiel de classe AB ; et
la détection du courant qui est alimenté sur le moteur (21) et la fourniture d'une première sortie de rétroaction au modulateur en largeur d'impulsion (33A, 33B) et d'une seconde sortie de rétroaction à l'étage d'amplificateur linéaire (A2, A4),
et **caractérisé en ce que** :
la détection du courant qui est alimenté sur le moteur (21) comprend la mesure et la soustraction de tensions à travers les résistances de détection de courant (R_{S1}, R_{S2}) des deux pilotes push-pull dans le mode de fonctionnement linéaire.

11. Procédé selon la revendication 10, comprenant en outre la réception, sur une entrée, d'une valeur de commande de courant du moteur, dans lequel une première fonction de transfert, depuis l'entrée jusqu'au pilote push-pull sélectionné parmi le premier pilote push-pull et le second pilote push-pull lorsque la sélection de mode de fonctionnement (37) sélectionne le mode de fonctionnement modulé en largeur d'impulsion, est sensiblement équivalente à une seconde fonction de transfert depuis l'entrée jusqu'à la combinaison du premier pilote push-pull et du second pilote push-pull lorsque la sélection de mode de fonctionnement (37) sélectionne le mode de fonctionnement linéaire, de telle sorte qu'une sortie d'un filtre en boucle (31) d'une boucle de commande de rétroaction qui fournit la première sortie de rétroaction et la seconde sortie de rétroaction soit réglée, après que le circuit de commande de sélection de mode de fonctionnement (37) a effectué un changement de sélection entre le mode de fonctionnement linéaire et le mode de fonctionnement modulé en largeur d'impulsion, à sensiblement une même valeur qu'une valeur précédente de la sortie du filtre en boucle (31) avant le changement.

12. Procédé selon la revendication 10 ou 11, comprenant en outre :
la réception d'une valeur numérique de commande de courant sur une entrée numérique ; et
la conversion de la valeur numérique de commande de courant au moyen d'un convertisseur numérique-analogique (DAC) (34) en une sortie analogique qui est fournie à la boucle de commande de rétroaction ;
et/ou dans lequel le procédé comprend en outre :
le filtrage de la seconde sortie de rétroaction au moyen d'un filtre en boucle (31) ; et
la quantification d'une sortie du filtre en boucle (31) afin de générer les signaux de commande modulés en largeur d'impulsion.

13. Procédé selon l'une quelconque des revendications 10 à 12, comprenant en outre :
la détection d'une position qui est commandée par le moteur (21) ; et
la génération d'une sortie qui est fournie à une entrée de la boucle de commande de rétroaction en fonction de la position détectée (51).

14. Procédé selon la revendication 13, dans lequel la détection d'une position est réalisée par un capteur d'image (12) qui est couplé mécaniquement au moteur (21), et dans lequel la génération d'une sortie est réalisée par un processeur d'image (13),
dans lequel le procédé comprend de préférence en outre :
le fait que le processeur d'image (13) détecte une instabilité dans une image qui est fournie par le processeur d'image (13) ;
la commande de la sortie qui est fournie à l'entrée de la boucle de commande de rétroaction afin de stabiliser l'image ;
et/ou dans lequel le procédé comprend de préférence en outre :
le fait que le processeur d'image (13) détecte une mesure d'une mise au point d'une image qui est fournie par le processeur d'image (13) ; et
la commande de la sortie qui est fournie à l'entrée (DIN) de la boucle de commande de rétroaction afin de maintenir une mise au point de l'image.

15. Procédé selon l'une quelconque des revendications 9 à 14, dans lequel, lorsque la sélection de mode de fonctionnement (37) sélectionne le mode de fonctionnement linéaire, le premier pilote push-pull et le second pilote push-pull fournissent une oscillation de signal qui est étendue sensiblement sur une plage de tension depuis un rail d'alimentation électrique négatif (V_{SS}) qui est fourni à l'étage de sortie jusqu'à un rail d'alimentation électrique positif (V_{DD}) qui est fourni à l'étage de sortie.
